# EUROPEAN PATENT APPLICATION

(11) **EP 1 925 559 A1**
(43) Date of publication of application: **28.05.2008**
(21) Application number: 07120852.4
(22) Date of filing: 16.11.2007
(51) Int. Cl.: B65D 8/04, B29C 45/14

(54) **Method for assemblying of containers made of plastics and laminate material components**

(30) Priority: 21.11.2006 GB 0623165
(71) Applicant: BAPCO CLOSURES RESEARCH LIMITED, Woking, Surrey GU21 4SU (GB)
(72) Inventor: McDoewll, Craig, Woking, Surrey GU21 4SU (GB); von Spreckelsen, Henning, Woking, Surrey GU21 4SU (GB); Foewll, Neil, Woking, Surrey GU21 4SU (GB)
(74) Representative: Cookson, Barbara Elizabeth

(57) **Abstract**

A container (2) is made of a bottom portion (4) formed from laminate material such as paperboard laminated with plastics and other materials, connected to an upper portion (8) assembled from a shoulder component (10) joined to a prefabricated neck and cap component (12). The neck and cap component is supplied to a filling line as a closed unit that can be located within a mould that is used to create the shoulder component and join it to the bottom portion of the container by means of *in situ* injection moulding. In an alternative embodiment the shoulder component is also prefabricated and is connected to the neck and cap component as well as the bottom portion by means of induction heat sealing or ultrasonic welding.

## Description

### Technical Field

The present invention relates to containers made of plastics and laminate material components and to methods of assembling such containers.

The containers described are intended for use in the technical field of aseptic packaging in which a barrier layer is provided, as well as the field of low-cost packaging for high-volume still products such as milk water and fruit juices, which do not require gas tight packaging.

Paperboard cartons are economical to produce. The carton blanks can be stored flat or delivered on reels. The cartons are only assembled when they are required to be filled. Therefore there are low transport and storage costs. However, such cartons lack the resealability and convenience of pouring as well as the visibility of the contents found with bottles. Bottles, however, consume significant storage space, are relatively heavy and use more expensive and increasingly scarce raw materials.

In order to provide some of the beneficial features of a bottle with a carton structure, it is known to provide plastics fitments for providing a reclosable spout on a laminate material carton. These fitments can provide an upper portion of the container. There are also carton fitments that are inserted through an opening in a flap of a paperboard carton blank that is folded to produce a gable-top container. Carton fitments may also be glued onto the top of a container, either where the container laminate structure has been scored or weakened to allow tearing of the paperboard, or where several layers of paper and other layers have previously been removed, leaving only a thin layer of plastics coated aluminium at an opening area.

In this description laminate material refers to materials which are plastics laminates or plastics coated paper (paperboard) and may incorporate a barrier layer such as an aluminium foil or an EVOH layer. Relative terms such as top and bottom refer to the orientation of the container when assembled and filled. It will be appreciated that when containers are filled from the base, they are necessarily inverted.

### Background Art

A packaging container made from an extrusion blow moulded top portion connected to a casing made from a laminate material is described in WO 98/32666 A (TETRA LAVAL HOLDINGS & FINANCE SA) 30.07.1998 (Hermodsson). Each top portion has a screw threaded neck and a larger bottom edge which can be thermosealed to the inside of a refolded upper edge of the casing. In the production method described top portions are moulded so that they are connected in series. Alternate pairs are connected by their necks and bottom edges. In order to close the neck a screw cap is provided. As with conventional extrusion blow moulded containers, there will be problems in providing good resealability between the imprecise extrusion blow moulded neck and an injection moulded overcap. This type of container, as with a standard paperboard carton, is filled from the base of the casing rather than through the neck.

Improvements in plastics materials particularly clarified Polypropylene (PP) since the date of Hermodsson mean that the top portion can be transparent rather than the cloudy appearance of HDPE.

A carton bottle of this general type was launched under the brand name TETRA APTIVA^{®} and is described in a press release of 05.04.2006. This press release describes how the plastics necks (top portions) are supplied in pairs joined at their bottom edges and with caps screwed on to the exposed necks. This prevents contamination of the interiors of the top portions and allows them to be manufactured at a separate location from the filling plant. Because the neck pairs are manufactured offline, that is away from the online completion of the containers at a filling plant, the rate at which they can be produced does not determine the filling speed of the plant.

However the conjoined neck pairs are bulky and difficult to transport. They do not stack and must also be cut apart before they can be connected to the casing. There are also issues associated with the connection between the container casing and a top portion. The press release admits that this proved to be one of the most difficult challenges in order to ensure that the new package would appear as an integrated, coherent container rather than an assembly of two parts glued together. Hermodsson teaches only that the parts are connected to one another in a suitable manner and claims thermosealing.

Ultrasonic or high-frequency welding, has already been suggested in EP 0108166 A (SHIKOKU KAKOKI CO LTD) 16.05.1984 . Typically, this requires the application of heat and pressure to both sides of the intended joint.

Induction heat sealing can also be used if one of the components contains a material, such as an aluminium foil barrier layer, in which eddy currents can be induced to generate heat and melt adjacent layers of plastic material on that component. This melted material will then fuse with plastics material on an adjacent surface of the other component that has been softened by conduction from the first component. This results in the two components being welded together.

Separately it is known to injection mould *in situ*, a plastics top panel to a laminate material bottom portion. This solution is used in the TETRA TOP^{®} product and is described, for example in WO 2005/032959 A (TETRA LAVAL HOLDINGS & FINANCE SA) 14.04.2005

Injection moulding a complex neck with a removable membrane panel, such as is described WO 02/070365 A (TETRA LAVAL HOLDINGS & FINANCE SA) 12.09.2002 (Holm) is a time-consuming process and requires several small but complex and expensive moulds depending on how many containers are simultaneously made. This online moulding of the neck slows down the production process at the filling plant.

Another example of *in situ* injection moulding is described US 2003015576 A (PAUL ALLEN CAMINO ET AL) 23.01.2003 2003. Here, a carton blank is inserted into an injection-moulding press and mould which seals the seams of the blank to form it into a carton. Camino suggests that handle and pouring opening can be injection-moulded onto the container. No specific details of the mould, other than that a split tool can be used, are described. Such a mould would present the same technical problems as arise with Holm especially if the pouring opening has a plug with an attached pull-ring. A required mould structure is shown in more detail EP 1616800 A (WB WILL BAKE GMBH) 18.01.2006 18.01.2006.

### Disclosure of Invention

It is desirable to take advantage of the benefits offered by the use of containers which combine the low cost, ease of transport in a flat condition and the ease of printing offered by laminate material, particularly modern paperboard laminates, with the improved closure design offered by plastics mouldings.

However the speed of filling and sealing of the resulting containers is critical to high capacity production and therefore manufacturing efficiency.

### Technical Problem

The present invention therefore addresses the technical problem of producing a container, which combines a laminate material bottom portion, referred to herein as a casing or sleeve, with a plastics top portion, in a fast and efficient manner.

### Technical Solution

This is achieved by separating the manufacture of a neck and cap component and a shoulder component of the top portion. The top portion can then be assembled inline or inside the filling machine rather than creating this large item offline as taught by Hermodsson. The present invention accordingly provide a container comprising a bottom portion made of laminate material and having a base through which the container is filled, the bottom portion being connected to a moulded plastics top portion having a neck closed by a cap, characterised in that the top portion comprises a prefabricated neck and cap component and a separate shoulder component which are joined together during the final assembly of the container prior to filling. The shoulder component can be created during the joining step.

The introduction of a separate shoulder component facilitates reduced assembly times for the container at a filling station. The shoulder component may also be prefabricated. However, as it can be a simple conical or cup shaped element, the shoulder components are stackable and easily transported.

The present invention also provides a method of assembling a container from a bottom portion made of laminate material and a prefabricated neck and cap component having a base, comprising the steps of placing the neck and cap component into a cavity of a first mould part, assembling a sleeve of laminate material to a second mould part, the second mould part having a face that engages with a part of the base of the neck and cap component when the first and second mould parts are assembled so as to define a space that will become a shoulder component of the container, and injecting a plastics material into said space in order to fuse an edge of the sleeve to the shoulder component and to fuse the shoulder component to an outer part of the base of the neck and cap component that protrudes into the space.

In an alternative embodiment, the invention provides a method of assembling a container from a bottom portion made of laminate material, a prefabricated shoulder component having open top and bottom ends, and a prefabricated neck and cap component having a base, comprising the steps of joining an upper edge of a sleeve of laminate material with the bottom end of a shoulder component, and joining the top end of the shoulder component to the base of the prefabricated neck and cap component. In this method the joints may be carried out by induction heat sealing or ultrasonic welding.

### Advantageous Effects

Using this invention allows a far superior ring pull design to be incorporated in the neck and cap component than is possible with *in situ* injection moulding of the neck and tamper evident closure in one process as taught by Holm.

The shoulder component can be moulded so as to provide raised surface decoration without slowing down the production process.

### Brief Description of Drawings

In order that the invention may be well understood, two embodiments thereof will now be described, by way of example only, with reference to the accompanying diagrammatic drawings, in which:

Figure 1 shows a view of an assembled and filled container as supplied to a consumer;

Figure 2a shows a section through a mould for *in situ* injection moulding a first embodiment of a container in which a pre-foiled BAP^{®} closure is used as the neck and cap component;

Figure 2b shows a section through a mould for *in situ* injection moulding a first embodiment of a container in which a standard carton fitment is used;

Figure 3a shows a section through a container made in accordance with a second embodiment of the assembly method of the invention in which a pre-foiled BAP^{®} closure is used as the neck and cap component;

Figure 3b shows a section through a container made in accordance with a second embodiment of the assembly method of the invention in which a standard carton fitment is used; and

Figure 4 shows a section through a sportscap type of neck and cap component that could be used as an alternative closure in either embodiment of the invention.

### Mode(s) for Carrying Out the Invention

A container 2 has a bottom portion 4 made from a casing that is in the form of a tube or sleeve 6 of laminate material. A top portion 8 is defined by a shoulder component 10 and a neck and cap component 12. These components are moulded plastics items. The term moulding includes thermoforming as well as an injection moulding-based technique, which are the preferred processes of present embodiments, but does not exclude the possibility that, for example, the shoulder component could be made by extrusion blow moulding, as taught by Hermodsson, or some other moulding technique.

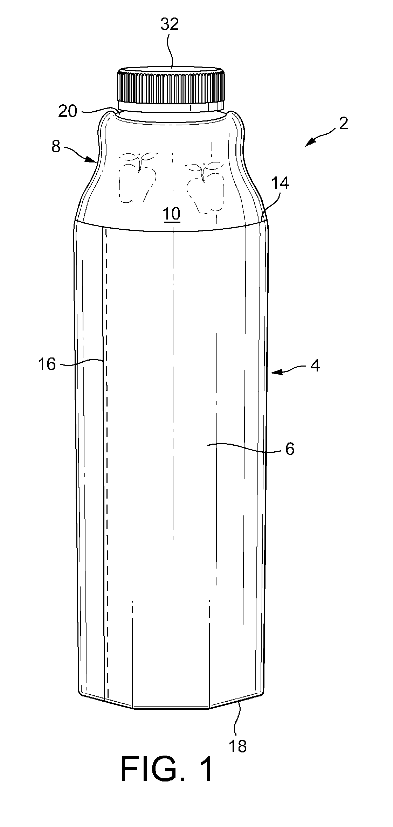

The sleeve 6 can be formed from paperboard coated with plastics material. Such materials include PP, PE, PET or other plastics depending on the application. The sleeve can be formed by wrapping or folding the paperboard and sealing its lapped longitudinal edges at a seam 16 to form a sleeve. The sleeve may have a circular, rectangular or of polygonal cross-section and its upper edge 14 may be circular merging into a different section in a lower part of the sleeve as shown in Figure 1. The sleeve may also be formed into an oval or kidney shaped section for ease of holding. Depending on the intended contents of the container a barrier layer, such as an aluminium foil may be provided as part of the laminate structure. The sleeve 6 has an upper edge 14 and a base 18. The container is designed to be filled through the base, 18. After filling, the base 18 can be closed in any conventional manner as with existing paperboard cartons. The upper edge 14 may be treated as described by Hermodsson by folding an outer layer over an exposed paperboard edge. As is well known, the laminate material may include a printed layer describing and advertising the contents of the container.

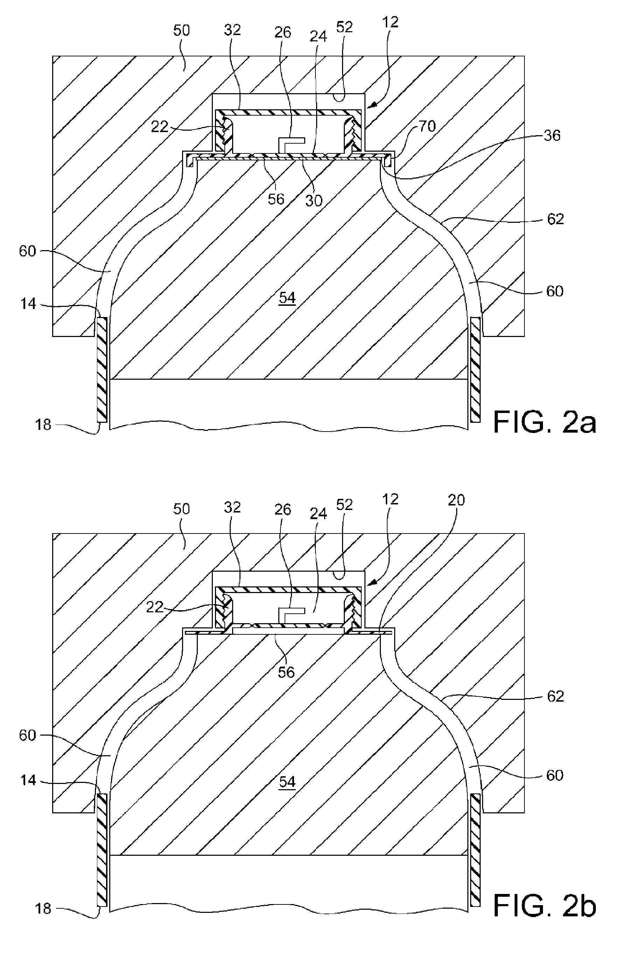

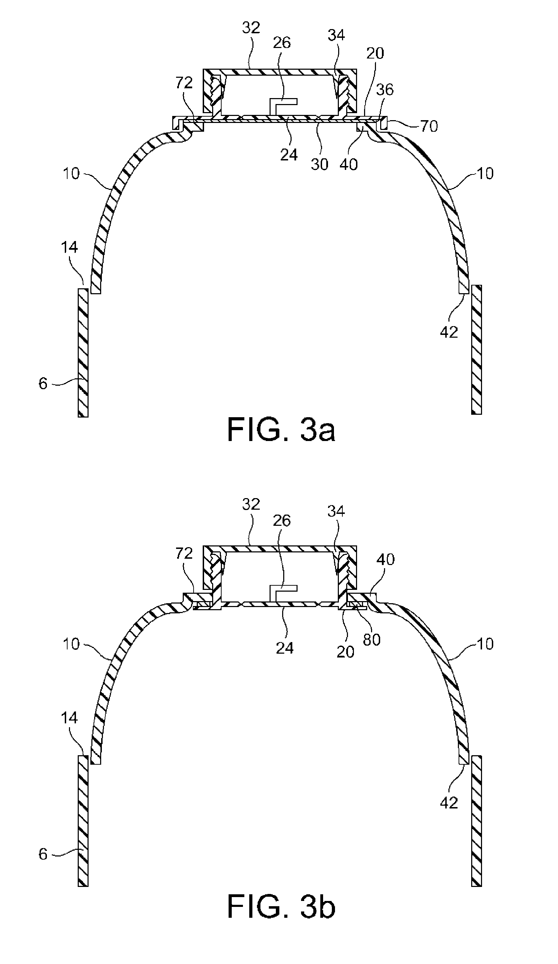

The neck and cap component 12 is essentially a standard closure. Two variations are illustrated. In Figure 2a and 3a the closure used is a BAP^{®} closure as described in GB 2408040 A (SPRECKELSEN MCGEOUGH LTD) 18.05.2005 (McGeough). In Figure 2b or 3b the closure is a standard carton fitment.

In Figure 2a the component 12 has a base flange 20 and a neck 22. A removable membrane, 24, is formed within the neck and supports a ring pull 26 that can be used to tear a foil 30 out of the neck when a consumer opens the container. The base 20 of the neck and cap component is closed by means of an induction heat sealing foil 30, which is welded to the base flange 20 and the removable membrane. It will be appreciated that a complete membrane 24 is not an essential feature when a pre-foiled fitment is employed. The foil 30 is a multilayer, laminated material, which is coated on both sides with a plastics material compatible with the materials to which it is to be sealed. An overcap 32 screws onto the neck 22 or may be provided to snap fit over the neck and seal to the neck with an internal plug 34. McGeough describes techniques for covering an exposed aluminium edge 36 of the foil 30. In this construction, those problems do not arise as the edge 36 is prevented from coming into contact with contents of the container by the remaining assembly steps to be described. The neck and cap component, 12, may be injection moulded from suitable plastics materials such as low-density polyethylene (LDPE), high-density polyethylene (HDPE) or polypropylene (PP) in order to provide good resealability of the overcap 32 to the neck 22.

Figure 2b shows a variation in which a standard carton fitment made from LDPE is used. Such a fitment is very economical. Since the fitment is not pre-foiled it must contain a complete membrane 24 if tamper evidence is required. Otherwise this neck and cap component is as described in relation to Figure 2A.

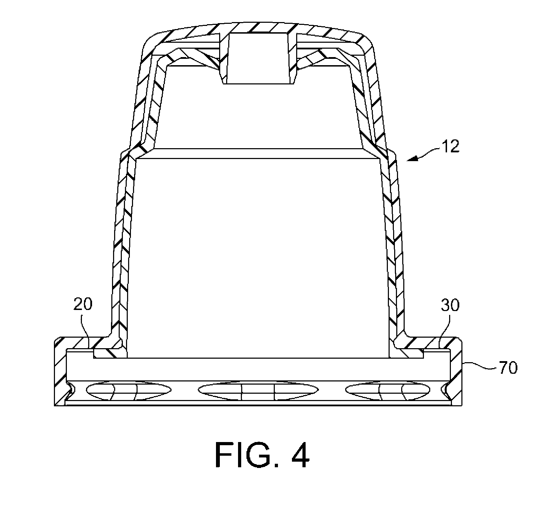

Alternatively a sportscap type of neck and cap component as shown in Figure 4 may be used. The component 12 shown in Figure 4 is described in more detail in GB 0526014.6 (BAPCO CLOSURES RESEARCH LTD) and its corresponding PCT application. This sportscap fitment has an annular foil 30 exposed at the outer edge of the base flange 20.

The neck and cap component is prefabricated and assembled separately away from a filling line. The components are small and lightweight, and therefore transport costs are not an issue. Because the neck and cap component 12 is closed and may be sealed by the foil 30, it is easy to sterilise prior to assembly. This component can be provided with a 100% barrier layer.

The shoulder component 10 may be prefabricated or injection moulded *in situ*. If a prefabricated component, as shown in Figure 3, it would have both an open top end 40 and open bottom end 42. The shoulder component 10 may be thermoformed from a multilayer material in which one layer is a barrier layer such as EVOH if a 100% barrier is required in the container. Otherwise, the component may be made of a uniform thermoplastics material. The plastics material of the component 10 is preferably the same as or compatible with a plastics material of the base flange 20 of the neck and cap component 12 and a plastics inner layer of the laminate material of the sleeve 6 so that the component 10 can be welded to both those elements either by induction heat sealing or ultrasonic welding. Where transparency is required then clarified PP or PET can be employed. During the thermoforming process the shoulder component can be provided with a decorative three-dimensional finish to compliment the branding of the contents of the container and any print on the laminate material. The shoulder may be transparent in order to allow the consumer to see the contents of the container.

The shoulder components can be stacked for ease of transport.

### In Situ Injection Moulding Method of Assembly

Figure 2 illustrates an injection mould tool for assembling the container. The mould has a first female part, 50, having a cavity, 52, which is sized to receive a closed and/or foil sealed neck and cap component 12. A second male mould part 54 has an upper circular face 56, which has a diameter is smaller than the base flange 20. This face 56 closes against a part of the base 20 when the mould is closed to prevent plastic material entering the space below the removable membrane 24 and making it difficult to open. An outer part of the flange 20 and the edge of the sealing foil 30 (where present) is left exposed. A space 60 is defined between the male and female mould parts. It is this space that forms the shoulder component 10 once plastic has been injected into the mould. A surface 62 of the female mould part 50, adjacent the space 60, may be engraved to provide raised three-dimensional surface decoration on an outer face of the shoulder component.

An open-ended sleeve, 6 is placed round the male mould part 54 so that its upper edge 14 just protrudes into the space 60.

In order to assemble the container, a plastics material is injected into the space 60. The plastics material melts and welds to the exposed outer part of the flange 20 and also to the edge 14 of the sleeve 6 in order to join the neck and cap component to the body portion 4 with an intervening shoulder. In the Figure 2A variation, a cut aluminium edge 36 of the foil 30 is exposed to the space 60, and becomes embedded in the injected plastics material of the shoulder during the injection moulding process.

When this method of assembly is used with a carton fitment as in Figure 2b or sportscap fitment that has an open base as shown in Figure 4, it is necessary that the face 56 of the mould part 54 should close tightly against the base of the fitment in order to prevent the escape of plastic from space 60 into the interior of the fitment.

The cycle time for assembling the containers using this process can be very rapid due to the simplicity of the mould tool. However, the prefabrication of the neck and cap component ensures good product performance for the consumer as well. Once the container has been assembled, it is filled from its base, and then sealed in the normal way. This filling method may be carried out in the same machine as is used to assemble the container. The filling machine may be arranged to enable the process to be completed within an aseptic environment.

### Alternative Method of Assembly

Figure 3 illustrates the assembly of the container when a prefabricated shoulder component is used. In this assembly method, there are two joints to be formed. These joints can be created sequentially or simultaneously.

In the variation of this embodiment shown in Figure 3a, the neck and cap component has a depending peripheral wall 70 at the outer edge of the flange 20. This allows the neck and cap component to be seated over a formation, 72 at the open top end 40 of the shoulder component. The formation 72 seats against the foil, 30, and ensures that an exposed aluminium cut edge 36 of the foil cannot come into contact with the contents of the container. The joint between the top end 40 and a flange 20 may be created by induction heat sealing.

In the variation shown in Figure 3b the components may be joined by ultrasonic welding. With this method, the fitment could be placed on top of the shoulder as with the previous variation or inserted inside the shoulder with the flange 20 seated against the formation 72 as illustrated In Figure 3B. The fitment could be provided with an annular foil ring 80 around the neck so that it can be induction heat sealed to the formation 72. The foil ring is unnecessary if ultrasonic welding is employed.

An upper edge, 14 of the sleeve 6 of laminate material is placed around the bottom end 42 of the shoulder portion 10, and these two parts are joined either by induction heat sealing, which would require the introduction of a heat sealing tape in the overlapped region if the laminated material does not contain a conductive barrier layer, or by ultrasonic welding. This joint is effectively the same as the liquid tight seal required in the prior art design taught by Hermodsson.

As before, the assembled container is filled from its open base and then sealed.

This method of assembly may be more suitable for use with a sportscap style fitment as shown in Figure 4.

## Claims

1. A container (2) comprising a bottom portion (4) made of laminate material and having a base (18) through which the container (2) is filled, the bottom portion (4) being connected to a moulded plastics top portion (8) having a neck (22) closed by a cap (32), **characterised in that** the top portion comprises a prefabricated neck and cap component (12) and a separate shoulder component (10) which are joined together during the final assembly of the container prior to filling.

2. A container as claimed in claim 1, wherein the neck and cap component (12) has a closed base.

3. A container as claimed in claim 1, wherein the neck and cap component (12) is a sportscap fitment.

4. A container as claimed in claim 1, wherein the separate shoulder is created during the joining together.

5. A method of assembling a container from a bottom portion made of laminate material and a prefabricated neck and cap component having a base, comprising the steps of
placing the neck and cap component into a cavity of a first mould part, assembling a sleeve of laminate material to a second mould part, the second mould part having a face that engages with a part of the base of the neck and cap component when the first and second mould parts are assembled so as to define a space that will become a shoulder component of the container, and injecting a plastics material into said space in order to fuse an edge of the sleeve to the shoulder component and to fuse the shoulder component to an outer part of the base of the neck and cap component that protrudes into the space.

6. A method of assembling a container from a bottom portion made of laminate material, a prefabricated shoulder component having open top and bottom ends, and a prefabricated neck and cap component having a base, comprising the steps of
joining an upper edge of a sleeve of laminate material with the bottom end of a shoulder component, and
joining the top end of the shoulder component to the base of the prefabricated neck and cap component.

7. A method as claimed in claim 6, wherein at least one joining step is carried out by induction heat sealing.

8. A method as claimed in claim 6 or 7, wherein at least one joining step is carried out by ultrasonic welding.

9. A method of manufacturing a filled container comprising assembling a container using a method as claimed in claim 5 or 6 in a machine and then filling the container through a lower edge of the sleeve immediately after assembly in the same machine.

10. A method as claimed in claim 9 carried out in an aseptic environment.

## Amended claims

### Amended claims in accordance with Rule 137(2) EPC.

**1.** A container (2) comprising a bottom portion (4) made of laminate material and having an open base (18) through which the container (2) is filled, the bottom portion (4) being connected to a moulded plastics top portion (8) having a neck (22) closed by a cap (32), **characterised in that** the top portion comprises a prefabricated neck and cap component (12) and a separate shoulder component (10) which are joined together during the final assembly of the container prior to filling.

**2.** A container as claimed in claim 1, wherein the neck and cap component (12) has a closed base.

**3.** A container as claimed in claim 1, wherein the neck and cap component (12) is a sportscap fitment.

**4.** A container as claimed in claim1, wherein the separate shoulder is created during the joining together.

**5.** A method of assembling a container from a bottom portion made of laminate material and a prefabricated neck and cap component having a base, comprising the steps of
placing the neck and cap component into a cavity of a first mould part, assembling an open ended sleeve of laminate material to a second mould part, the second mould part having a face that engages with a part of the base of the neck and cap component when the first and second mould parts are assembled so as to define a space that will become a shoulder component of the container, and
injecting a plastics material into said space in order to fuse an edge of the sleeve to the shoulder component and to fuse the shoulder component to an outer part of the base of the neck and cap component that protrudes into the space.

**6.** A method of assembling a container from a bottom portion made of laminate material, a prefabricated shoulder component having open top and bottom ends, and a prefabricated neck and cap component having a base, comprising the steps of
joining an upper edge of an open-ended sleeve of laminate material with the bottom end of a shoulder component, and
joining the top end of the shoulder component to the base of the prefabricated neck and cap component.

**7.** A method as claimed in claim 6, wherein at least one joining step is carried out by induction heat sealing.

**8.** A method as claimed in claim 6 or 7, wherein at least one joining step is carried out by ultrasonic welding.

**9.** A method of manufacturing a filled container comprising assembling a container using a method as claimed in claim 5 or 6 in a machine and then filling the container through a lower edge of the sleeve immediately after assembly in the same machine.

**10.** A method as claimed in claim 9 carried out in an aseptic environment.
